# EUROPÄISCHE PATENTSCHRIFT

(11) **EP 1 315 644 B1**
(45) Veröffentlichungstag und Bekanntmachung des Hinweises auf die Patenterteilung: **14.01.2004**
(21) Anmeldenummer: 01976057.8
(22) Anmeldetag: 03.08.2001
(51) Int. Cl.: B60S 1/38

(54) **WISCHVORRICHTUNG, INSBESONDERE FÜR KRAFTFAHRZEUGE**
WIPER DEVICE, ESPECIALLY FOR MOTOR VEHICLES
DISPOSITIF D'ESSUIE-GLACE, NOTAMMENT POUR AUTOMOBILES

(30) Priorität: 07.08.2000 DE 10038395
(43) Veröffentlichungstag der Anmeldung: 04.06.2003
(73) Patentinhaber: Valeo Systemes d'essuyage, 78321 Le Mesnil Saint Denis (FR)
(72) Erfinder: EGNER-WALTER, Bruno, 74076 Heilbronn (DE)
(74) Vertreter: Jahn, Wolf-Diethart
(86) Internationale Anmeldenummer: PCT/EP2001/009013
(87) Internationale Veröffentlichungsnummer: WO 2002/012035

(56) Entgegenhaltungen:
- DE-A- 19 650 929
- FR-A- 2 755 926
- US-A- 3 480 986

## Beschreibung

Die Erfindung betrifft eine Wischvorrichtung, insbesondere für Kraftfahrzeuge, mit einem Wischarm, mit einem an dem einen Ende des Wischarms vorhandenen Wischblatt, welches ein Wischgummi mit zwei einander gegenüberliegenden, sich in Längsrichtung erstreckenden Längsnuten und ein Trageelement in Form von zwei in den Längsnuten angeordneten, bandartig langgestreckten Federschienen umfasst, und mit einem an dem dem Wischblatt zugewandten Ende des Wischarms angeordneten Verbindungsabschnitt zur Anbindung des Wischblatts.

Bei den genannten Wischvorrichtungen gewährleistet das Trageelement eine optimale Verteilung des vom Wischarm ausgehenden Wischblatt-Anpressdrucks an der zu wischenden Scheibe. Dazu ist das Trageelement im unbelasteten Zustand, wenn also das Wischblatt nicht an der Scheibe anliegt, entsprechend vorgebogen und weist eine unter anderem von der Krümmung der zu wischenden Scheibe abhängige Krümmung auf. Das Trageelement in Form von zwei entsprechend vorgebogenen Federschienen einer derartigen Wischvorrichtung ersetzt somit die aufwendige Tragbügelkonstruktion, wie sie aus dem Stand der Technik bekannt geworden ist.

Aus der DE 196 27 115 A1 ist ein Wischblatt der eingangs beschriebenen Art bekannt geworden. Eine derartige Wischvorrichtung hat allerdings den Nachteil, dass sie insbesondere aufgrund einer mittig an dem Wischblatt angeordneten Anschlussvorrichtung eine gewisse Bauhöhe aufweist, die insbesondere bei hohen Fahrzeuggeschwindigkeiten das Wischverhalten negativ beeinflusst und zu Windgeräuschen führen kann. Ein weiterer Nachteil einer derartigen Wischvorrichtung ist, dass aufgrund der Anordnung von Zwischen- und Endklammern um den Wischgummirücken eine Relativbewegung zwischen dem Wischgummi und den Federschienen nicht gegeben ist, wodurch insbesondere die Wischung von in dem Krümmungsradius variierenden Schreiben nicht befriedigend erfolgen kann.

Der vorliegenden Erfindung liegt deshalb die Aufgabe zugrunde, den vorstehend geschilderten Nachteilen des Standes der Technik abzuhelfen.

Diese Aufgabe wird bei einer Wischvorrichtung der eingangs beschriebenen Art erfindungsgemäß dadurch gelöst, dass die Enden der Federschienen wenigstens an einem Ende des Wischblatts in Längsrichtung über das Wischgummi herausragen und an den Verbindungsabschnitt angebunden sind, wobei die Federschienenenden im Bereich des Verbindungsabschnitts bzw. der Verbindungsabschnitt Distanzmittel aufweisen bzw. aufweist, welche einen definierten Abstand der beiden Federschienenenden vorgeben.

Aufgrund einer derartigen Anbindung des Wischblatts an den Wischarm wird keine mittig an dem Wischblatt angeordnete, störende Anschlussvorrichtung, wie sie aus dem Stand der Technik bekannt ist, benötigt. Außerdem ergeben sich insbesondere in der Serienfertigung aufgrund der Einsparung dieses Bauteils enorme Kostenvorteile. Weiterhin wird aufgrund der Distanzmittel gewährleistet, dass die beiden Federschienen in einem definierten Abstand zueinander angeordnet sind. Insbesondere dann, wenn der Abstand der beiden Federschienen zueinander größer als der Steg zwischen den beiden Längsnuten des Wischgummis breit ist, kann eine Relativbewegung des Wischgummis gegenüber den Federschienen stattfinden, welche insbesondere bei der Wischung von gekrümmten Scheiben zu einem guten Wischergebnis beiträgt.

Erfindungsgemäß kann vorgesehen sein, dass die Distanzmittel in den beiden Federschienen gegenüberliegende Distanzbohrungen und wenigstens eine in die Distanzbohrungen eingreifende Distanzklammer umfassen. Die Bohrungen sind dabei vorteilhafterweise an den Federschienen zwischen dem Wischgummi und dem dem Wischgummi zugewandten Ende des Wischarms angeordnet. Eine derartige Wischvorrichtung hat insbesondere den Vorteil, dass die beiden Federschienen auch im vormontierten Zustand, d. h. bevor sie an den Wischarm angebunden werden, aufgrund der Distanzklammer einen definierten Abstand zueinander aufweisen. Weiterhin werden durch die Distanzklammer die beiden Federschienen und das sich zwischen den Federschienen befindende Wischgummi zusammengehalten, so dass ein Transport des Wischblatts gut möglich ist. Denkbar ist auch, dass zusätzlich eine derartige Distanzklammer mit entsprechenden Distanzbohrungen an dem dem Wischarm abgewandten freien Ende des Wischblatts vorhanden ist.

Vorteilhafterweise kann hierbei vorgesehen sein, dass die Distanzklammern in den Distanzbohrungen rastbar gehaltert sind. Damit wird eine einfache Montage der Federschienen mit dem Wischgummi und den Distanzklammern gewährleistet, die dennoch eine dauerhafte und nicht selbstlösende Verbindung darstellt.

Bei einer anderen Ausgestaltung der Erfindung ist vorgesehen, dass der Verbindungsabschnitt des Wischarms als Distanzmittel wenigstens einen mittig zwischen den beiden Federschienenenden angeordneten Vorsprung aufweist, wobei die einander zugewandten Seiten der Federschienenenden im montierten Zustand an dem Vorsprung anliegen. Aufgrund eines solchen Vorsprungs wird ein definierter Abstand zwischen den beiden Federschienenenden vorgegeben, wobei auf die Verwendung von Distanzklammern verzichtet werden kann. Allerdings können die im Vorhergehenden beschriebenen Distanzklammern auch bei dieser Ausführungsform der Erfindung als Transportklammern Verwendung finden.

Ein derartiger, an dem Verbindungsabschnitt angeordneter Vorsprung kann vorteilhafterweise kostengünstig in den Verbindungsabschnitt gestanzt oder geprägt sein.
Es ist auch denkbar, dass der Verbindungsabschnitt Aussparungen oder Schlitzungen aufweist, entlang denen der wenigstens eine Vorsprung ausgebildet ist. Insbesondere, wenn sich diese Schlitzungen in Längsrichtung des Wischblattes erstrecken, können durch Herausdrücken des Vorsprungs entlang dieser Schlitzungen definierte Anlageflächen für die einander zugewandten Längsseiten der Federschienen gebildet werden.

Bei einer weiteren Ausführungsform der Erfindung ist als Distanzmittel ein Einlegeelement vorgesehen, das einerseits an dem Verbindungsabschnitt angeordnet ist und andererseits eine Auflagefläche zur Aufnahme der Federschienenenden aufweist, wobei das Einlegeelement wenigstens einen zwischen den beiden Federschienenenden angeordneten Vorsprung umfasst. Eine derartige Ausgestaltung der Erfindung hat den Vorteil, dass ein Bearbeiten des Verbindungsabschnitts zur Bildung von Distanzmitteln entfällt. Vielmehr kann das Einlegeelement separat gefertigt werden und in einem nächsten Montageschritt zwischen den Verbindungsabschnitt und die Federschienen angeordnet werden.

Vorteilhafterweise kann dabei vorgesehen sein, dass das Einlegeelement aus Kunststoff ist und der Vorsprung an das Einlegeelement angeformt ist. Ein derartiges Einlegeelement lässt sich auf einfache und kostensparende Art und Weise herstellen.

Weiterhin ist denkbar, dass das Einlegeelement weitere zwei, die voneinander abgewandten Längsseiten der Federschienenenden umgreifende Vorsprünge aufweist. Dadurch können die freien Enden der Federschienen zwischen den mittig angeordneten und den beiden seitlich angeordneten Vorsprüngen eingelegt werden, wodurch sie in ihrer Position relativ zueinander fixiert werden.

Um die freien Enden der beiden Federschienen an dem Verbindungsabschnitt auf einfache Art und Weise zu haltern, kann erfindungsgemäß vorgesehen sein, dass der Verbindungsabschnitt die beiden voneinander abgewandten Längsseiten der Federschienen und/oder des Einlegeelements um- bzw. hintergreifen. Ein derartiges Hintergreifen kann bspw. durch Verbiegen oder auch Verstemmen des Verbindungsabschnitts erreicht werden.

Dabei ist denkbar, dass die Federschienen Aussparungen zur Aufnahme der die Federschienen hintergreifenden Kanten des Verbindungsabschnitt aufweisen. Dadurch wird eine zusätzliche Fixierung und Halterung der freien Enden der Federschienen an dem Verbindungsabschnitt auf einfache Art und Weise erreicht.

Es ist auch denkbar, dass die Federschienen an dem Verbindungsabschnitt form-, kraft- oder reibschlüssig gehaltert sind. Dabei bietet sich insbesondere an, die freien Enden der Federschienen mit dem Verbindungsabschnitt zu verklemmen. Eine andere, sehr dauerhafte und unlösbare Art der Verbindung, die sich insbesondere in der Praxis als vorteilhaft erwiesen hat, ist das Verschweißen der freien Enden der Federschienen mit dem Verbindungsabschnitt.

Um eine entsprechende Relativbewegung des Wischgummis in Längsrichtung zwischen den beiden Federschienen zu ermöglichen, ist erfindungsgemäß vorgesehen, dass die quer zur Längsrichtung der Wischvorrichtung gemessene Breite des Vorsprungs gleich breit oder breiter als der Steg zwischen den beiden Längsnuten des Wischgummis ist.
Bei einer weiteren Ausgestaltung der Erfindung ist an den dem Wischarm abgewandten Enden der Federschienen ein Verbindungsteil zur Verbindung der beiden Federschienenenden vorgesehen. Hierdurch werden die beiden freien Enden der Federschienen relativ zueinander fixiert. Außerdem kann durch ein derartiges Verbindungsteil die Torsionssteifigkeit des Wischblatts verbessert werden.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Fig. 1: eine erfindungsgemäße Wischvorrichtung in Seitenansicht,
- Fig. 2, 3 und 4: Detaildarstellungen der Wischvorrichtung gemäß Fig. 1,
- Fig. 5 - 9: eine andere Ausführungsform der Erfindung in verschiedenen Ansichten,
- Fig. 10: eine weitere Ausführungsform der Erfindung im Querschnitt durch den Verbindungsabschnitt,
- Fig. 11 - 13: eine weitere Ausführungsform der Erfindung in verschiedenen Ansichten.

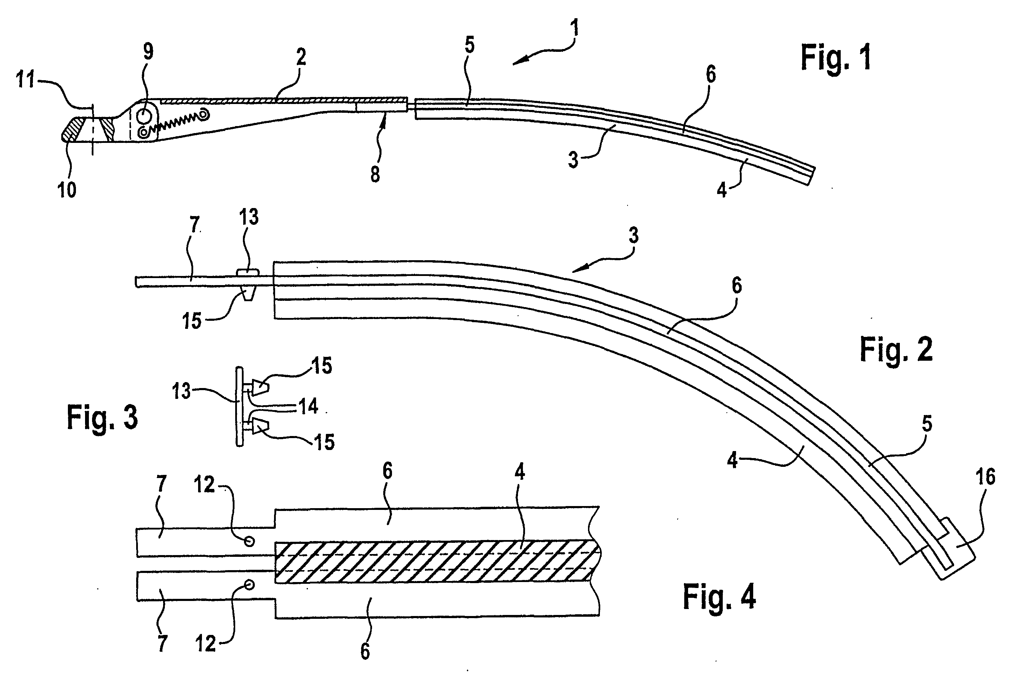

Fig. 1 zeigt eine Wischvorrichtung 1 für Kraftfahrzeuge mit einem Wischarm 2 und mit einem an dem einen Ende des Wischarms 2 vorhandenen Wischblatt 3. Das Wischblatt 3 weist dabei ein Wischgummi 4 mit zwei einander gegenüberliegenden, sich in Längsrichtung erstreckenden Längsnuten 5 und ein Trageelement in Form von zwei in den Längsnuten 5 angeordneten, bandartig langgestreckten Federschienen 6 auf. Da die Wischvorrichtung 1 im unbelasteten Zustand dargestellt ist, ist die Krümmung der Federschienen 6 deutlich zu erkennen.

Wie insbesondere in Fig. 2 deutlich zu erkennen ist, ragen die Federschienen 6 an dem dem Wischarm 2 zugewandten Ende 7 in Längsrichtung über das Wischgummi 4 heraus. Die herausragenden Enden 7 der Federschienen 6 sind dabei, wie in Fig. 1 gezeigt, an einem Verbindungsabschnitt 8 des Wischarms 2 angebunden.

Die freien Enden 7 der Federschienen 6 können dabei an dem Verbindungsabschnitt 8 form-, kraft- oder reibschlüssig gehaltert sein. Insbesondere empfiehlt sich ein Klemmen oder Verschweißen.

Fig. 1 zeigt außerdem ein über eine Gelenkverbindung 9 mit dem dem Wischblatt 3 abgewandten Ende des Wischarms 2 verbundenes antreibbares Bauteil 10. Das antreibbare Bauteil 10 ist dabei um die Achse 11 zur Erzeugung der Wischbewegung von einem Antriebsmotor antreibbar, und zwischen dem Bauteil 10 und dem Wischarm 2 wirkt eine Feder, welche eine Anpreßkraft des Wischarmes in Richtung der zu wischenden Scheibe erzeugt.

Zum Erhalt eines definierten Abstandes zwischen den beiden Federschienen 6 sieht die Wischvorrichtung 1 gemäß den Fign.
1 - 4 als Distanzmittel in den beiden Federschienen gegenüberliegende Distanzbohrungen 12 und eine in die Distanzbohrungen 12 eingreifbare Distanzklammer 13 vor. Die in der Fig. 3 gezeigte Distanzklammer 13 weist zwei Zapfen 14 auf, die zum Eingriff in die Distanzbohrungen 12 vorgesehen sind. An den freien Enden der Zapfen 14 sind Rastmittel in Form von federnden Schnapphaken 15 angeordnet, die in montiertem Zustand, der in Fig. 2 gezeigt ist, die Distanzbohrungen 12 unlösbar hintergreifen.

Die dargestellte Distanzklammer 31 weist lediglich zwei Zapfen 14 auf, die in lediglich je eine Bohrung 12 an jeder Federschiene 6 eingreifen. Es wäre allerdings auch denkbar, dass die Distanzklammer 31 mehrere Zapfen 14, beispielsweise mit vier oder sechs Zapfen, aufweisen kann, die dann zum Eingriff in mehrere Bohrungen 12 vorgesehen wären.

Der Vorteil derartiger Distanzmittel liegt insbesondere darin, dass zum einen die beiden Federschienen 6 mit einem definierten Abstand zueinander gehaltert werden. Dadurch kann insbesondere beim Wählen eines geeigneten Abstandes vorteilhafterweise erreicht werden, dass eine Relativbewegung des Wischgummis 4 gegenüber den beiden Federschienen 6 in Längsrichtung ermöglicht wird, wodurch ein besonders vorteilhaftes Wischergebnis erzielt werden kann. Zum anderen wird durch derartige Distanzmittel das Wischblatt 3 als zusammengehörige Baugruppe gehalten, welche gut handhabbar ist.

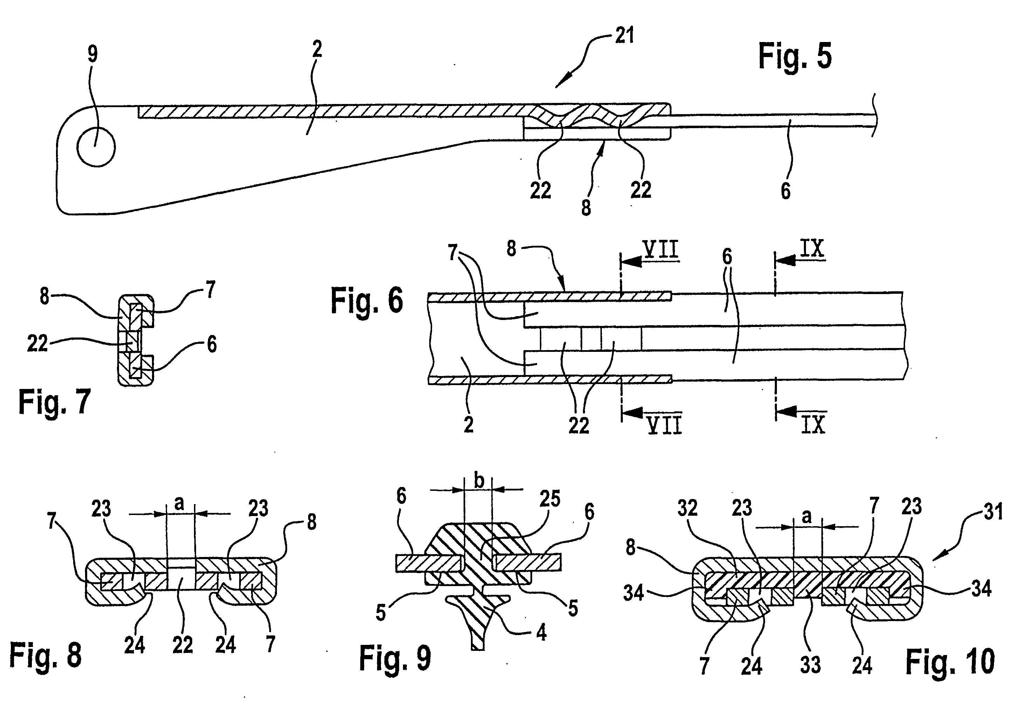

Bei der in Fig. 4 gezeigten Ausführungsform sind die Federschienen 6 an den Enden 7 schmaler ausgestaltet, als in dem das Wischgummi 4 tragenden Bereich. Dadurch wird insbesondere eine vorteilhaft kleine Dimensionierung des Verbindungsabschnitts 8 ermöglicht.

Wie in Fig. 2 angedeutet ist, ist an den dem Wischarm 2 abgewandten Enden der Federschienen 6 ein Verbindungsteil 17 vorgesehen, das zur Verbindung dieser beiden Enden der Federschienen 6 vorgesehen ist.

Bei der in den Fign. 5 - 9 gezeigten Wischvorrichtung 21 weist der Verbindungsabschnitt 8 als Distanzmittel zwei mittig zwischen den beiden Federschienen 6 angeordnete Vorsprünge 22 auf. Im montierten Zustand der Wischvorrichtung 21 liegen, wie insbesondere in Fig. 6 deutlich zu erkennen ist, die einander zugewandten Seiten der Federschienen 6 bzw. Federschienenenden 7 an den sich in Längsrichtung erstreckenden Seitenflächen der beiden Vorsprünge 22 an. Um zu den einander zugewandten Seiten der Federschienenenden 7 parallel verlaufende Anlageflächen der beiden Vorsprünge 22 zu erhalten, wird der Verbindungsabschnitt 8 zunächst an seiner Oberseite rechts und links neben dem jeweiligen Vorsprung 22 geschlitzt. In einem nächsten Schritt werden die Vorsprünge durch Eindrücken der zwischen den Schlitzungen gelegenen Bereiche gebildet. Da die Schlitzungen parallel zu den Längsseiten der Federschienen 6 verlaufenden, verlaufen die gebildeten Anlageflächen ebenfalls entsprechend parallel. Die Wischvorrichtung 21 gemäß den Fign. 5 - 9 sieht dabei zwei derartige Vorsprünge 22 vor. Allerdings ist denkbar, dass andere Ausführungsformen, je nach Größe und Art der Wischvorrichtung, weitere Vorsprünge 22 vorsehen können.

Wie insbesondere aus Fig. 7 deutlich wird, hintergreift der Verbindungsabschnitt 8 die beiden voneinander abgewandten Längsseiten der Federschienen 6. Dadurch wird auf einfache Art und Weise eine sichere Halterung der Federschienen 6 an dem Verbindungsabschnitt 8 erreicht.

Fig. 8 zeigt nun eine weitere Ausgestaltung der Erfindung, wobei Fig. 8 im Wesentlichen dem Schnitt gemäß der Fig. 7 entspricht. Unterschied hierbei ist, dass die Federschienen 6 Aussparungen 23 aufweisen, die zur Aufnahme der die Federschienen 6 hintergreifenden Kanten 24 vorgesehen sind. Damit wird ein noch stabileres und dauerhaftes Verbinden der Federschienen 6 bzw. der Enden 7 der Federschienen 6 mit dem Verbindungsabschnitt 8 des Wischarms 2 erreicht.

Um eine entsprechend gute Relativbewegung des Wischgummis 4 in Längsrichtung der Wischvorrichtung 21 zu erreichen, ist die quer zur Längsrichtung der Wischvorrichtung 21 gemessene Breite a gemäß Fig. 8 gleich breit oder vorteilhafterweise etwas breiter als die Breite b des Stegs 25, der zwischen den beiden Längsnuten 5 des Wischgummis 4 vorhanden ist.

Fig. 10, die einen Querschnitt durch den Verbindungsabschnitt 8 einer weiteren Wischvorrichtung 31 zeigt, sieht als Distanzmittel ein Einlegeelement 32 vor. Das Einlegeelement 32 ist einerseits an dem Verbindungsabschnitt 8 angeordnet, andererseits weist es eine Aufnahmefläche zur Aufnahme der Federschienen 6 bzw. der Federschienenenden 7 vor, wobei das Einlegeelement einen Vorsprung 33 zwischen den beiden Federschienen aufweist. Außerdem weist das Einlegeelement 32 weitere zwei, die voneinander abgewandten Längsseiten der Federschienen 7 umgreifende Vorsprünge 34 auf. Damit ist eine definierte Aufnahme der Federschienenenden 7 durch das Einlegeelement 32 gewährleistet. Zur Verbindung des Einlegeelements 32 und den Federschienenenden 7 mit dem Verbindungsabschnitt 8 hintergreift der Verbindungsabschnitt 8 das Einlegeelement 32 als auch die Federschienenenden 7. Entsprechend der Ausführung gemäß Fig. 8 weist die Wischvorrichtung 31 Aussparungen 23 zur Aufnahme der die Federschienenenden 7 hintergreifenden Kanten 24 auf.

Das Einlegeelement 32 ist vorteilhafterweise aus Kunststoff, wobei der Vorsprung 33 an das Einlegeelement angeformt ist.

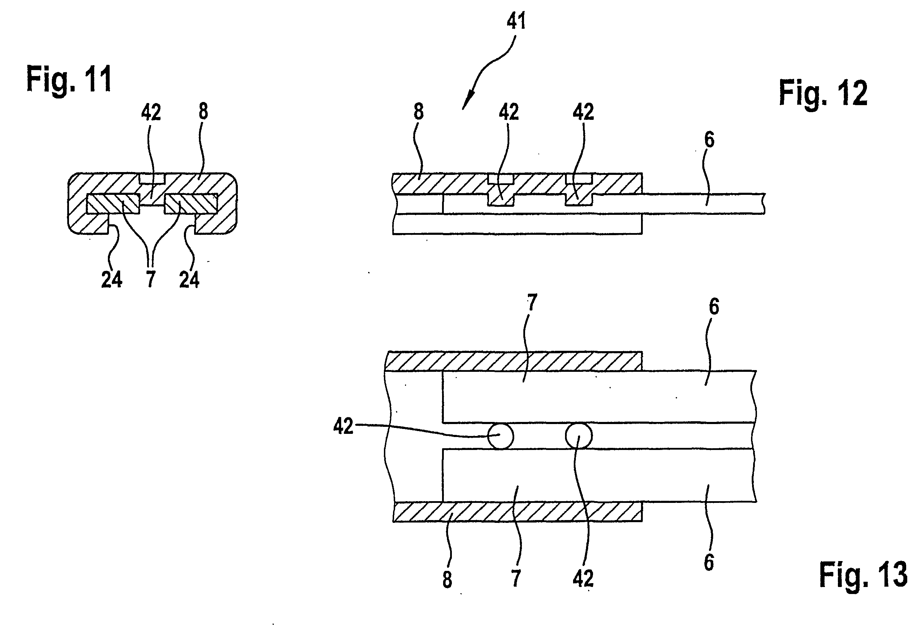

Die in den Fign. 11 - 13 gezeigte Wischvorrichtung 41 unterscheidet sich von der in den Fign. 5 - 9 gezeigten Wischvorrichtung 21 dadurch, dass sie Vorsprünge 42 aufweist, die einen kreisrunden Querschnitt aufweisen und in den Verbindungsabschnitt 8 eingeprägt sind. Wie aus Fig. 11 deutlich hervorgeht, hintergreift auch gemäß diesem Ausführungsbeispiel der Verbindungsabschnitt 8 die voneinander abgewandten Kanten der beiden Federschienenenden 7.

## Patentansprüche

1. Wischvorrichtung (1, 21, 31, 41), insbesondere für Kraftfahrzeuge, mit einem Wischarm (2), mit einem an dem einen Ende des Wischarms (2) vorhandenen Wischblatt (3), welches ein Wischgummi (4) mit zwei einander gegenüberliegenden, sich in Längsrichtung erstreckenden Längsnuten (5) und ein Trageelement in Form von zwei in den Längsnuten (5) angeordneten, bandartig langgestreckten Federschienen (6) umfasst, und mit einem an dem dem Wischblatt (3) zugewandten Ende des Wischarms (2) angeordneten Verbindungsabschnitt (8) zur Anbindung des Wischblatts (3), **dadurch gekennzeichnet, dass** die Enden (7) der Federschienen (6) wenigstens an einem Ende (7) des Wischblatts (3) in Längsrichtung über das Wischgummi (4) herausragen und an den Verbindungsabschnitt (8) angebunden sind, wobei die Federschienen im Bereich des Verbindungsabschnitts (8) bzw. der Verbindungsabschnitt (8) Distanzmittel aufweisen bzw. aufweist, welche einen definierten Abstand (a) der beiden Federschienenenden (7) vorgeben.

2. Wischvorrichtung (1) nach Anspruch 1, **dadurch gekennzeichnet, dass** die Distanzmittel in den beiden Federschienen (6) gegenüber liegende Distanzbohrungen (12) und wenigstens eine in die Distanzbohrungen (12) eingreifende Distanzklammer (13) umfassen.

3. Wischvorrichtung (1) nach Anspruch 2, **dadurch gekennzeichnet, dass** die Distanzklammer (13) in den Distanzbohrungen (12) rastbar gehaltert ist.

4. Wischvorrichtung (21, 41) nach einem der vorhergehenden Ansprüche, **dadurch gekennzeichnet, dass** der Verbindungsabschnitt (8) des Wischarms (2) als Distanzmittel wenigstens einen mittig zwischen den beiden Federschienenenden (7) angeordneten Vorsprung (22, 42) aufweist, wobei die einander zugewandten Seiten der Federschienenenden (7) im montierten Zustand an dem Vorsprung (22, 42) anliegen.

5. Wischvorrichtung (41) nach Anspruch 3, **dadurch gekennzeichnet, dass** der wenigstens eine Vorsprung (42) in den Verbindungsabschnitt (8) gestanzt oder geprägt ist.

6. Wischvorrichtung (21) nach Anspruch 3 oder 4, **dadurch gekennzeichnet, dass** der Verbindungsabschnitt Aussparungen oder Schlitzungen aufweist, entlang denen der wenigstens eine Vorsprung (22) ausgebildet ist.

7. Wischvorrichtung (31) nach einem der vorhergehenden Ansprüche, **dadurch gekennzeichnet, dass** als Distanzmittel ein Einlegeelement (32) vorgesehen ist, das einerseits an dem Verbindungsabschnitt (8) angeordnet ist und andererseits eine Auflagefläche zur Aufnahme der Federschienenenden (7) aufweist, wobei das Einlegeelement (32) wenigstens einen zwischen den beiden Federschienenenden (7) angeordneten Vorsprung (33) umfasst.

8. Wischvorrichtung (31) nach Anspruch 6, **dadurch gekennzeichnet, dass** das Einlegeelement (32) aus Kunststoff ist und der Vorsprung (33) an das Einlegeelement (32) angeformt ist.

9. Wischvorrichtung (31) nach Anspruch 6 oder 7, **dadurch gekennzeichnet, dass** das Einlegeelement (32) weitere zwei, die voneinander abgewandten Längsseiten der Federschienenenden (7) umgreifende Vorsprünge (34) aufweist.

10. Wischvorrichtung (1, 21, 31, 41) nach einem der vorhergehenden Ansprüche, **dadurch gekennzeichnet, dass** der Verbindungsabschnitt (8) die beiden voneinander abgewandten Längsseiten der Federschienenenden (7) und/oder des Einlegeelements (32) um- bzw. hintergreift.

11. Wischvorrichtung (21, 31) nach Anspruch 9, **dadurch gekennzeichnet, dass** die Federschienen Aussparungen (23) zur Aufnahme der die Federschienen (6) hintergreifenden Kanten (24) des Verbindungsabschnitts (8) aufweisen.

12. Wischvorrichtung (1, 21, 31, 41) nach einem der vorhergehenden Ansprüche, **dadurch gekennzeichnet, dass** die Federschienenenden (7) an dem Verbindungsabschnitt (8) form-, kraft- oder reibschlüssig gehaltert sind.

13. Wischvorrichtung (1, 21, 31, 41) nach einem der vorhergehenden Ansprüche, **dadurch gekennzeichnet, dass** die quer zur Längsrichtung der Wischvorrichtung (1, 21, 31, 41) gemessene Breite (a) des Vorsprungs gleich breit oder breiter als der Steg (25, b) zwischen den beiden Längsnuten (5) des Wischgummis (4) ist.

14. Wischvorrichtung (1, 21, 31, 41) nach einem der vorhergehenden Ansprüche, **dadurch gekennzeichnet, dass** an den dem Wischarm (2) abgewandten Enden der Federschienen (6) ein Verbindungsteil (16) zur Verbindung der beiden Federschienenenden vorgesehen ist.

## Claims

1. Wiper device (1, 21, 31, 41), especially one for motor vehicles, having a wiper arm (2) with a wiper blade (3) at the end of the wiper arm (2), the wiper blade comprising a rubber element (4) having two opposing longitudinal grooves (5) extending in a longitudinal direction and a support element in the form of two elongate spring strips (6) arranged in the longitudinal grooves (5), and having a connecting section (8) arranged at the end of the wiper arm (2) facing the wiper blade (3) for attachment of the wiper blade (3), **characterised in that** the ends (7) of the spring strips (6) project beyond the rubber element (4) in a longitudinal direction, at least at one end (7) of the wiper blade (3), and are attached to the connecting section (8), the end(s) of the spring strip(s) having spacers in the area of the connecting section (8) or the connecting sections (8), which maintain a defined interval (a) between the two spring strip ends (7).

2. Wiper device (1) according to Claim 1, **characterised in that** the spacers in the two spring strips (6) comprise opposing spacer holes (12) and at least one spacer clip (13) engaging in the spacer holes (12).

3. Wiper device (1) according to Claim 2, **characterised in that** the spacer clip (13) is snap-fitted in the spacer holes (12)

4. Wiper device (21, 41) according to any one of the preceding Claims, **characterised in that** the connecting section (8) of the wiper arm (2) has as its spacer at least one projection (22, 42) centrally arranged between the two spring strip ends (7), the opposing sides of the spring strip ends (7) bearing on the projection (22, 42) when assembled.

5. Wiper device (41) according to Claim 3, **characterised in that** at least one projection (42) is punched or stamped into the connecting section (8).

6. Wiper device (21) according to Claim 3 or 4, **characterised in that** the connecting section has recesses or slots along which at least one projection (22) is formed.

7. Wiper device (31) according to any one of the preceding Claims, **characterised in that** an insert (32) is provided as spacer, which on the one hand is arranged on the connecting section (8) and on the other has a seating surface to receive the spring strip ends (7), the insert (32) comprising at least one projection (33) arranged between the two spring strip ends (7).

8. Wiper device (31) according to Claim 6, **characterised in that** the insert (32) is made of plastic and the projection (33) is formed on to the insert (32) .

9. Wiper device (31) according to Claim 6 or 7, **characterised in that** the insert (32) has two further projections (34) that grip around the longitudinal sides of the spring strip ends (7) remote from one another.

10. Wiper device (1, 21, 31, 41) according to any one of the preceding Claims, **characterised in that** the connecting section (8) grips behind the two longitudinal sides of the spring strip ends (7) and/or of the insert (32) remote from one another.

11. Wiper device (21, 31) according to Claim 9, **characterised in that** the spring strips have recesses (23) for seating of the edges (24) of the connecting section (8) gripping behind the spring strips (6).

12. Wiper device (1, 21, 31, 41) according to any one of the preceding Claims, **characterised in that** the spring strip ends (7) are attached to the connecting section (8) by means of a positively interlocking, adhesive or frictional connection.

13. Wiper device (1, 21, 31, 41) according to any one of the preceding Claims, **characterised in that** the width (a) of the projection measured transversely to the longitudinal direction of the wiper device (1, 21, 31, 41) is equal to or wider than the land (25, b) between the two longitudinal grooves (5) in the rubber element (4) .

14. Wiper device (1, 21, 31, 41) according to any one of the preceding Claims, **characterised in that** a connecting part (16) for connecting the two spring strip ends is provided at the ends of the spring strips (6) remote from the wiper arm (2).

## Revendications

1. Dispositif d'essuie-glace (1, 21, 31, 41), en particulier pour véhicules utilitaires, qui comporte un bras d'essuie-glace (2), avec, présente à une extrémité du bras d'essuie-glace (2), une raclette d'essuie-glace (3) qui comprend un caoutchouc d'essuie-glace (4) avec deux rainures longitudinales (5) opposées l'une à l'autre s'étendant dans le sens longitudinal et un élément porteur sous la forme de deux lames flexibles (6) allongées en forme de bande disposées dans les deux rainures longitudinales (5), et comportant un segment d'assemblage (8) disposé à l'extrémité du bras d'essuie-glace (2) tournée vers la raclette d'essuie-glace (3) pour attacher la raclette d'essuie-glace (3), **caractérisé en ce que** les extrémités (7) des lames flexibles (6) dépassent du caoutchouc d'essuie-glace (4) dans le sens longitudinal au moins à une extrémité (7) de la raclette d'essuie-glace (3) et sont attachées au segment d'assemblage (8), les lames flexibles présentant dans la zone du/des segment(s) d'assemblage (8) des moyens d'écartement qui prédéfinissent une distance définie (a) entre les extrémités (7) des deux lames flexibles.

2. Dispositif d'essuie-glace (1) selon la revendication 1, **caractérisé en ce que** les moyens d'écartement comprennent des trous d'écartement (12) opposés dans les deux lames flexibles (6) et au moins une bride d'écartement (13) s'engageant dans les trous d'écartement (12).

3. Dispositif d'essuie-glace (1) selon la revendication 2, **caractérisé en ce que** la bride d'écartement (13) est fixée dans les trous d'écartement (12) par encliquetage.

4. Dispositif d'essuie-glace (21, 41) selon l'une des revendications précédentes, **caractérisé en ce que** le segment d'assemblage (8) du bras d'essuie-glace(2) présente comme moyen d'écartement au moins un bossage (22, 42) disposé au milieu entre les extrémités (7) des deux lames flexibles, les côtés tournés l'un vers l'autre des extrémités (7) des lames flexibles se trouvant à l'état monté au niveau du bossage (22, 42).

5. Dispositif d'essuie-glace (41) selon la revendication 3, **caractérisé en ce qu'**au moins un bossage (42) est embouti ou estampé dans le segment d'assemblage (8).

6. Dispositif d'essuie-glace (21) selon l'une des revendications 3 ou 4, **caractérisé en ce que** le segment d'assemblage présente des évidements ou des fentes lé long desquels est conçu le au moins un bossage (22).

7. Dispositif d'essuie-glace (31) selon l'une des revendications précédentes, **caractérisé en ce qu'**est prévu comme moyen d'écartement un élément d'insertion (32), qui d'une part est disposé au niveau du segment d'assemblage (8) et qui d'autre part présente une surface d'appui pour le positionnement des extrémités (7) des lames flexibles, l'élément d'insertion (32) comprenant au moins un bossage (33) disposé entre les extrémités (7) des deux lames flexibles.

8. Dispositif d'essuie-glace (31) selon la revendication 6, **caractérisé en ce que** l'élément d'insertion (32) est en matière plastique, et le bossage (33) est formé sur l'élément d'insertion (32).

9. Dispositif d'essuie-glace (31) selon l'une des revendication 6 ou 7, **caractérisé en ce que** l'élément d'insertion (32) présente deux bossages supplémentaires (34) enveloppant les côtés longs opposés l'un à l'autre des extrémités (7) des lames flexibles.

10. Dispositif d'essuie-glace (1, 21, 31, 41) selon l'une des revendications précédentes, **caractérisé en ce que** le segment d'assemblage (8) enveloppe et/ou enserre les deux côtés longs opposés l'un à l'autre des extrémités (7) des lames flexibles et/ou de l'élément. d'insertion (32).

11. Dispositif d'essuie-glace (21, 31) selon la revendication 9 **caractérisé en ce que** les lames flexibles présentent des évidements (23) pour le positionnement des branches (24) du segment d'assemblage (8) enserrant les lames flexibles (6).

12. Dispositif d'essuie-glace (1, 21, 31, 41) selon l'une des revendications précédentes, **caractérisé en ce que** les extrémités (7) des lames flexibles sont maintenues sur le segment d'assemblage (8) par ajustement de forme, de force ou de friction.

13. Dispositif d'essuie-glace (1, 21, 31, 41) selon l'une des revendications précédentes, **caractérisé en ce que** la largeur (a) du bossage mesurée transversalement au sens de la longueur du dispositif d'essuie-glace (1, 21, 31, 41) est de la même largeur ou plus large que le pont (25, b) entre les deux rainures longitudinales (5) du caoutchouc d'essuie-glace (4).

14. Dispositif d'essuie-glace (1, 21, 31, 41) selon l'une des revendications précédentes, **caractérisé en ce qu'**une une pièce d'assemblage (16) est prévue aux extrémités des lames flexibles (6) opposées au bras d'essuie-glace (2) pour l'assemblage des extrémités des deux lames flexibles
